# EUROPEAN PATENT SPECIFICATION

(11) **EP 1 698 388 B1**
(45) Date of publication and mention of the grant of the patent: **11.09.2013**
(21) Application number: 04807779.6
(22) Date of filing: 24.12.2004
(51) Int. Cl.: C04B 35/195, C04B 35/565, C04B 35/626, C04B 38/00

(54) **METHOD OF PRODUCING HONEYCOMB STRUCTURE BODY**
VERFAHREN ZUR HERSTELLUNG EINES WABENKONSTRUKTIONSKÖRPERS
PROCEDE DE PRODUCTION D'UN CORPS DE STRUCTURE EN NID D'ABEILLES

(30) Priority: 26.12.2003 JP 2003435184
(43) Date of publication of application: 06.09.2006
(73) Proprietor: NGK Insulators, Ltd., Nagoya-shi, Aichi 467-8530 (JP)
(72) Inventor: KANEDA, Atsushi, c/o NGK INSULATORS, LTD., Nagoya-shi, Aichi 4678530 (JP); ICHIKAWA, Shuichi, c/o NGK INSULATORS, LTD., Nagoya-shi, Aichi 4678530 (JP)
(74) Representative: Paget, Hugh Charles Edward
(86) International application number: PCT/JP2004/019423
(87) International publication number: WO 2005/063360

(56) References cited:
- JP-A- 1 171 188
- JP-A- 9 019 613
- JP-A- 10 167 856
- JP-A- 11 049 583
- JP-A- 11 071 188
- JP-A- 2004 262 747

## Description

### Technical Field

The present invention relates to a method for producing a honeycomb structure which can be used for various kinds of filters or the like. In particular, the present invention relates to a method for producing a honeycomb structure, the method being capable of suppressing defects or deformation upon forming and improving a yield.

### Background Art

Among various filters, for example, a DPF (diesel particulate filter) is a filter used for trapping and removing particulates contained in exhaust gas from a diesel engine or the like and is incorporated into an exhaust gas system of a diesel engine for use. The filter such as a DPF is produced by bonding a plurality of honeycomb structures (honeycomb segment) with a honeycomb structure being one unit (honeycomb segment).

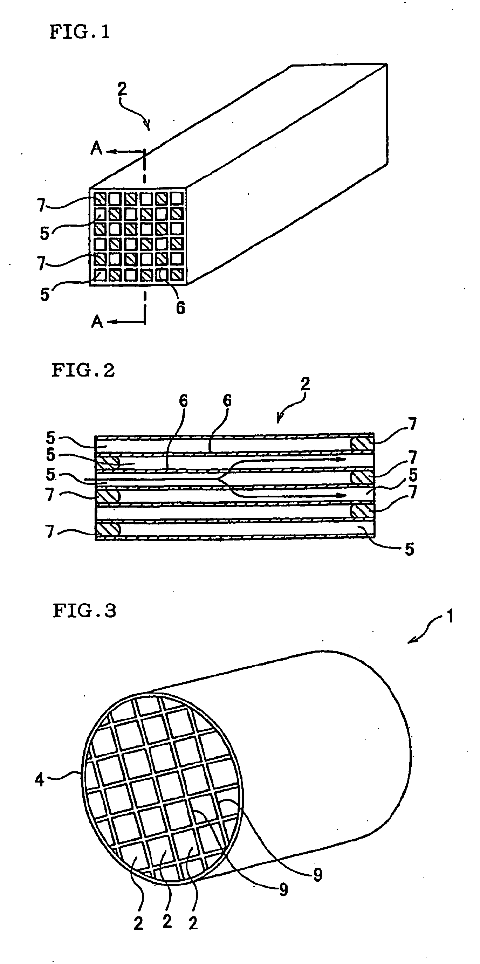

Figs. 1 and 2 show a honeycomb structure as one unit (honeycomb segment) to be used for such a DPF. As shown in Figs. 1 and 2, the honeycomb structure 2 is formed in a cylindrical shape having a square section and has a large number of cells 5 separated from each other by porous partition walls 6 inside thereof. The cells 5 extend through the honeycomb structure 2 in the axial direction, and adjacent cells are alternately plugged with a plugging material 7 at one end portion. That is, in one cell 5, the left end portion is open, and the right end portion is plugged with the plugging material 7. In another cell 5 adjacent to the above cell 5, the left end portion is plugged with the plugging material 7, and the right end portion is open. Such plugging forms a checkerwise pattern in each of the end portions of the honeycomb structure 2 as shown in Fig. 1.

Incidentally, a shape of a section of the honeycomb structure 2 may be a triangle or a hexagon besides a square as described above. In addition, a shape of a section of the cells 5 may be a triangle, a hexagon, a circle, an ellipse, or the like.

Fig. 3 shows a DPF as a filter produced by bonding a plurality of the above honeycomb structures 2. The DPF 1 can be produced by bonding a plurality of honeycomb structure with a bonding material 9 to obtain a bonded body, grinding the outer periphery of the bonded body so that a section of the bonded body has a circular, elliptic, triangular, or another shape, and covering a peripheral surface with a coating material 4. The DPF 1 is disposed in a passage for exhaust gas from a diesel engine to trap particulates including soot discharged from the diesel engine.

That is, when the DPF 1 is disposed inside the passage of exhaust gas, exhaust gas flows into the cells 5 of each of the honeycomb structures 2 from the left side of Fig. 2 and move toward the right side. Exhaust gas enters from the left side of the honeycomb structure 2 and flows into the honeycomb structure 2 from the opening cells 5 without being plugged. The exhaust gas flowing into the cells 5 passes through the porous partition walls 6 and flow out from other cells. When exhaust gas passes through the partition walls 6, particulates including soot in exhaust gas are trapped by the partition walls 6, and exhaust gas can be purified.

Such a honeycomb structure 2 can be produced by preparing clay by adding water to a ceramic raw material and an organic binder as the main raw material to obtain a mixture and kneading the mixture, subjecting the clay to extrusion to have a honeycomb structure, and drying and firing the honeycomb structure. When particles having low plasticity such as a ceramic raw material is used in producing such a honeycomb structure, there arises a problem of insufficient press-bonding at an intersecting point of the honeycomb structures due to low plasticity. Incidentally, press-bonding at an intersecting point means a bonding phenomenon of clay which flows out of grooves from the four direction (left, right, upper, and lower direction) of the extruding die and joins at one point by being extruded from the extruding die.

When a honeycomb structure having insufficient press-bonding at an intersecting point is used for a DPF, defects are clearly detected by an inspection with laser smoke or the like, and actually cell cracks are observed. Thus, low plasticity of clay causes a lowered yield.

On the other hand, in a DPF, it is necessary to reduce pressure loss from the viewpoint of improving fuel consumption in an engine, and for this it is required that a honeycomb structure serving as a substrate constituting a DPF has raised porosity (to increase porosity of the honeycomb structure). To cope with such a request, there is disclosed the use of a solid pore-forming material such as a starch or a hollow pore-forming material such as an already foamed forming resin as a pore-forming material (see JP-A-2001-373986).

There is also disclosed a method for producing a porous body used as a catalyst support, a synthesis place for various compounds and the like (see JP-A-11-71188). In this production method, a ceramic powder, an organic binder, and an acrylic acid based resin having high absorbability are mixed to obtain a mixture, the mixture is extruded to give a formed body, and the formed body is heated and fired. The resin having high absorbability has an average particle diameter of 10 to 70 µm before absorbing water, several hundreds µm after absorbing water, and a water-absorption ratio of 100 to several hundreds.

Further, there is disclosed a method for producing a porous ceramic used for a sensor element, a catalyst support, an incombustible building material, a heat-insulating material, a sound-insulating material, a shock-absorbing material, or the like (see JP-A-10-167856). The production method is characterized by having a step of subjecting a water-swelling water-absorbing resin having a gel strength of 10,000 dyne/cm² or more to water absorption for gelation, a step of mixing the gel with a ceramic powder for formation, and a step of firing the formed body. By this method can be obtained a porous ceramic having a porosity of 40% or more and a bending strength of 15% or more of that of a dense ceramic of the same component. The water-swelling water-absorbing resin has an absorbing capacity of 100 to 1,000 g/g (water-absorption ratio of 100 to 1,000) for deionized water, and water is not added except for water absorbed by the water-absorbing resin in this production method.

However, in JP-A-2001-373986, there is inconvenience of causing cracks in a honeycomb structure upon heating for debinding by an excessive temperature inclination generated in the honeycomb structure due to generation of heat in a starch. To cope with this, in order to effectively use an already foamed forming resin as a pore-forming material, it is necessary to make a clay density low for inhibition of collapse of the already foamed forming resin during kneading the raw material. However, in the case of making a clay density low, there is an inconvenience of increasing deformation upon forming because hardness of the clay is low. Therefore, there arise problems of a lowered yield and deterioration in size accuracy when only a starch or already foamed forming resin is used as a pore-forming material.

The production method described in JP-A-11-71188 is specifically a method in which a formed body in the form of a pellet is obtained by extrusion forming, the formed body is granulated to obtain a spherical formed body, and drying and firing the spherical formed body to obtain a porous body. Though in the method properties of products are not influenced by presence or absence of defects upon extrusion forming (formability upon extrusion forming), which is an advantage, there is a problem that only a product having low porosity of 39% or less can be obtained (see Table 1 of JP-A-11-71188).

Further, since the production method described in JP-A-10-167856 is a method in which an organic binder is not added, there is a problem of lowering a yield when the method is applied to a honeycomb structure requiring high plasticity. This is because, a yield can not be improved until an organic binder is added in the forming step of a honeycomb structure requiring high plasticity, i.e., a yield can be improved for the first time by a combined effect by addition of an organic binder and a water-absorbing resin.

The present invention has been made in view of the above problems and aims to provide a method for producing a honeycomb structure, the method being excellent in yield with inhibiting defects or deformation from generating upon forming a honeycomb structure and capable of improving size accuracy and having little pressure loss.

### Disclosure of the Invention

In order to achieve the above aim, according to the present invention, there is provided the following method for producing a honeycomb structure.

[1] A method for producing a honeycomb structure, comprising:
a first step of mixing and kneading a ceramic raw material, an organic binder, a water-absorbing resin, and water to obtain clay,
a second step of forming the clay into a honeycomb-structured shape and drying the clay to obtain a honeycomb dried body, and
a third step of firing the honeycomb dried body to obtain a honeycomb structure having a porosity of 40% or more after firing.

By such a constitution, a water-absorbing resin mixed and kneaded in clay absorbs water to give a structure in which a resin absorbs water, which has high mechanical strength and hardly collapses. Therefore, even in the case of making a density of clay high, it has stable pore formability. In addition, since a density of clay can be made high, the clay has high hardness, and deformation upon forming can be suppressed to be very small. Further, by kneading with a ceramic raw material and water, the ceramic raw material and the water-absorbing resin becomes granular. Therefore, plasticity of the clay is enhanced, and press-bonding at an intersecting point can efficiently performed upon extrusion molding. This can inhibit generation of defects. This gives an excellent yield and can improve size accuracy. Further, the water-absorbing resin bums out by heating upon debinding, and by the burning out, pores are generated to give a honeycomb structure having a porosity of 40% or more. Thus, by imparting high porosity to a honeycomb structure, pressure loss can be reduced.

[2] A method for producing a honeycomb structure according to the above [1], wherein a resin in a form of particles having an average particle diameter of 2 to 200 µm after absorbing water is used as the water-absorbing resin constituting the clay in the first step.

This constitution gives excellent size accuracy and can securely suppress generation of defects by inhibiting pores from becoming larger than they need after firing.

[3] A method for producing a honeycomb structure according to the above [1] or [2], wherein a resin in a form of particles having a particle distribution of 20 parts by mass or less of particles having a particle diameter of 10 µm or less and 20 parts by mass or less of particles having a particle diameter of 100 µm or more after absorbing water is used as the water-absorbing resin constituting the clay in the first step.

By this constitution, clay obtains sufficient plasticity and dispersibility, and pores do not become larger than they need after firing. Therefore, generation of defects can be inhibited.

[4] A method for producing a honeycomb structure according to any one of the above [1] to [3], wherein a resin in a form of particles having an average particle diameter of 30% or less with respect to a thickness of partition walls of the honeycomb structure after absorbing water is used as the water-absorbing resin constituting the clay in the first step.

By this constitution, since pores do not become larger than they need after firing, generation of defects can be inhibited.

[5] A method for producing a honeycomb structure according to any one of the above [1] to [4], wherein a resin in a form of particles having an aspect ratio of 50 or less aster absorbing water is used as the water-absorbing resin constituting the clay in the first step.

By this constitution, since pores formed by a water-absorbing resin become communicating pores after firing, pressure loss can be reduced.

[6] A method for producing a honeycomb structure according to any one of the above [1] to [5], wherein 0.1 to 20 parts by mass of the water-absorbing resin constituting the clay in the first step is mixed with respect to 100 parts by mass of the ceramic raw material.

By this constitution, since heat generation upon debinding can be suppressed in the state that plasticity of the clay is enhanced, generation of cell cracks can be inhibited, and a yield can be improved.

[7] A method for producing a honeycomb structure according to any one of the above [1] to [6], wherein an amount of the water constituting the clay in the first step is a value obtained by multiplying a mixing amount of the water-absorbing resin by water-absorption ratio (mixing amount of the water-absorbing resin times water-absorption ratio) or more with respect to 100 parts by mass of the ceramic raw material.

By this constitution, the water-absorbing resin can be made in the saturated water-absorbing state. Further, an amount of water content for dissolving the organic binder can be ensured, and since a mixing amount of water in the water-absorbing resin is large, porosity of a honeycomb structure after firing can be increased.

[8] A method for producing a honeycomb structure according to any one of the above [1] to [7], wherein the water-absorbing resin constituting the clay in the first step is mixed and kneaded in the state that a part of the water is previously absorbed by the water-absorbing resin.

By this constitution, the water-absorbing resin absorbs water, and time for being granulated with the ceramic raw material can be shortened, and as a result, time for kneading can be shortened.

[9] A method for producing a honeycomb structure according to any one of the above [1] to [8], wherein a chlorine content in the water-absorbing resin constituting the clay in the first step is 20 parts by mass or less with respect to 100 parts by mass of the water-absorbing resin.

By this constitution, generation of dioxin or the like upon debinding can be inhibited, which makes a post-treatment step unnecessary and suppresses a production cost.

[10]A method for producing a honeycomb structure according to any one of the above [1] to [9], wherein a sulfur content in the water-absorbing resin constituting the clay in the first step is 20 parts by mass or less with respect to 100 parts by mass of the water-absorbing resin.

By this constitution, generation of harmful gas such as SOₓ and H₂SO₄ upon debinding can be inhibited, which makes a post-treatment step for a desulfurizer or the like unnecessary and suppresses a production cost.

[11] A method for producing a honeycomb structure according to any one of the above [1] to [10], wherein a nitrogen content in the water-absorbing resin constituting the clay in the first step is 20 parts by mass or less with respect to 100 parts by mass of the water-absorbing resin.

By this constitution, generation of harmful gas such as NOₓ, HNO₃ and NH₃ upon debinding can be inhibited, which makes a post-treatment step for denitration or the like unnecessary and suppresses a production cost.

[12] A method for producing a honeycomb structure according to any one of the above [1] to [11], wherein returned clay is used as the clay in the first step.

By this constitution, the water-absorbing resin obtains high mechanical strength and is hardly collapsed. Therefore, porosity is not deviated even if it is used as returned clay, and a yield of the raw material can be improved.

[13] A method for producing a honeycomb structure according to any one of the above [1[ to [12], wherein returned dry clay is used as a raw material containing the ceramic raw material, the organic binder, and the water-absorbing resin in the first step.

By this constitution, the absorption reaction of the water-absorbing resin becomes reversible, and even if water is removed, similar properties can be obtained by absorbing water again. Therefore, porosity is not deviated even if returned dry clay is used, and a yield of the raw material can be improved.

[14] A method for producing a honeycomb structure according to any one of the above [1] to [13], wherein a pore-forming material is further mixed and kneaded to obtain the clay in the first step.

By this constitution, an amount of the water-absorbing resin to be added can be suppressed. Therefore, hardness of the clay is increased, and size accuracy can be enhanced.

[15] A method for producing a honeycomb structure according to any one of the above [1] to [14], wherein the ceramic raw material constituting the clay in the first step contains as a main component at least one selected from a group consisting of a cordierite-forming raw material, mullite, alumina, aluminum titanate, lithium aluminum silicate, silicon carbide, silicon nitride, and metal silicon.

By this constitution, a honeycomb structure can maintain a certain form even after firing.

[16] A method for producing a honeycomb structure according to the above [15], wherein the cordierite-forming raw material is used as the ceramic raw material, and the water-absorbing resin contains neither alkali metal nor alkaline earth metal except for magnesium, aluminum, and silicon.

By this constitution, mixing of alkali metal or alkaline earth metal except for magnesium, aluminum, and silicon can be avoided, and extraordinary thermal expansion of the honeycomb structure after firing can be avoided.

[17] A method for producing a honeycomb structure according to the above [15], wherein metal silicon is used as the ceramic raw material, and a debinding treatment at 500°C or less for 10 hours or less is conducted before the honeycomb dried body is fired in the third step to burn out carbon contained in the water-absorbing resin.

By this constitution, carbonization of metal silicon can be avoided, and composition of the honeycomb structure after firing can be controlled.

[18] A method for producing a honeycomb structure according to any one of the above [1] to [17], wherein the firing of the honeycomb dried body in the third step is conducted in a non-oxidizing atmosphere, and the water-absorbing resin constituting the clay in the first step does not contain one or more kinds selected from a group consisting of alkali metal, sulfur, chlorine, and nitrogen.

By this constitution, mixing of one or more kinds selected from a group consisting of alkali metal, sulfur, chlorine, and nitrogen due to the water-absorbing resin can be avoided, and scattering of these substances from a ceramic formed body to a firing furnace upon firing can be avoided, and thereby inhibiting the firing furnace from being damaged by corrosion of the furnace material due to scattering of such a substance.

### Brief Description of the Drawings

Fig. 1 is a perspective view of an embodiment of a honeycomb structure.
Fig. 2 is a sectional view taken along with a A-A line in Fig. 1.
Fig. 3 is a perspective view of an embodiment of a DPF.
Fig. 4 is a schematic explanatory view of an inspection apparatus for a soot print test.

### Reference Numerals

2, 21: honeycomb filter (honeycomb structure), 5, 23: cell, 6, 24: partition wall

### Best Mode for Carrying out the Invention

A mode for carrying out a method for producing a honeycomb structure of the present invention is hereinbelow described specifically. A honeycomb structure produced according to the present invention has a structure shown in, for example, Figs. 1 and 2 and is used for, for example, a filter such as a DPF shown in Fig. 3.

A method for producing a honeycomb structure of the present invention is characterized by including a first step of mixing and kneading a ceramic raw material, an organic binder, a water-absorbing resin, and water to obtain clay; a second step of forming the clay into a honeycomb-structured shape and drying the clay to obtain a honeycomb dried body; and a third step of firing the honeycomb dried body to obtain a honeycomb structure having a porosity of 40% or more after firing.

### (First step)

The first step of the present invention is a step where a ceramic raw material, an organic binder, a water-absorbing resin, and water are mixed together and kneaded to obtain clay.

Here, a water-absorbing resin used in the present invention absorbs water when mixed and kneaded with water with the ceramic raw material and the organic binder described below to have a structure where water is held inside the resin, having high mechanical strength and being hardly collapsed. Since the water-absorbing resin and the ceramic raw material are granular when they are mixed and kneaded, plasticity of the clay can be enhanced. In the case of forming a honeycomb structure by extrusion forming using a extrusion die in the first step in such a state as described below, press-bonding at an intersecting point is sufficiently conducted. Therefore, formation of defects can be inhibited.

Water-absorption ratio of the water-absorbing resin is preferably 2 to 100 times, and more preferably 2 to 50 times. When water-absorption ratio is below 2 times, water-absorbability is low, and sometimes plasticity is not enhanced. When water-absorption ratio is above 100 times, because a formed body formed into a honeycomb structure contains much water, not only drying time is prolonged, but also much electric power for drying is required, which sometimes increases a drying cost, and which sometimes lowers a yield because it is prone to be deformed by a lowered hardness of the honeycomb-structured formed body and an increase in drying shrinkage. Here, shrinkage means an index showing a degree of expansion and contraction before and after drying and can be obtained by (length before drying)/(length after drying). Thus, when water-absorption ratio of the water-absorbing resin is 2 to 100 times, plasticity of the clay is enhanced, and a certain hardness is maintained, thereby giving a honeycomb structure having good formability and size accuracy.

Incidentally, a water-absorbing resin described in the above JP-A-11-71188 has a water-absorption ratio of 100 to several hundreds times, and a water-absorbing resin described in the above JP-A-10-167856 has a water-absorption ratio of 100 to 1000 times. These resins are clearly different from the water-absorbing resin of the present embodiment in the point of water-absorption ratio.

In the present embodiment, a resin in a form of particles has an average particle diameter of preferably 2 to 200 µm, more preferably 2 to 100 µm, after absorbing water. When the average particle diameter is below 2 µm, sometimes an effect as a plasticizer is not sufficiently be exhibited. On the other hand, when an average particle diameter is above 200 µm, sometimes the honeycomb structure has defects of too large pores after firing as well as lowered dispersibility due to a relatively large particle diameter in comparison with the other powder for use in the clay. When the resin has an average particle diameter of preferably 2 to 200 µm after absorbing water, the resin has sufficient plasticity and dispersibility, and pores do not become larger than necessary after firing. Therefore, generation of defects can be inhibited.

Incidentally, since the water-absorbing resin described in the above JP-A-11-71188 has an average particle diameter of several hundreds µm, the water-absorbing resin is clearly different from the water-absorbing resin of the present embodiment in the point of average particle diameter after adsorbing water.

In the present embodiment, a resin in a form of particles preferably having a particle distribution of 30 parts by mass or less of particles having a particle diameter of 10 µm or less and 30 parts by mass or less of particles having a particle diameter of 100 µm or more after absorbing water is used, more preferably having a particle distribution of 20 parts by mass or less of particles having a particle diameter of 10 µm or less and 20 parts by mass or less of particles having a particle diameter of 100 µm or more after absorbing water, as the water-absorbing resin.

In the particle distribution after absorbing water, when distribution of particles having a particle diameter of 10 µm or less is above 20 parts by mass, sometimes an effects as a plasticizer cannot sufficiently be exhibited, and sometimes pore formability is lowered because the particles enter in a gap among particles of ceramic raw material. When distribution of particles having a particle diameter of 100 µm or more is above 20 parts by mass, sometimes dispersibility of the water-absorbing resin is lowered because the average particle diameter is larger in comparison with the other raw materials. When dispersibility of the water-absorbing resin is lowered, the water-absorbing resin coheres in the clay, and pores formed by the water-absorbing resin is large after firing, which sometimes becomes a defect in itself. In the particle distribution after absorbing water, when distribution of particles having a particle diameter of 10 µm or less is 20 parts by mass or less and when distribution of particles having a particle diameter of 100 µm or more is 20 parts by mass or less, sufficient plasticity and dispersibility is imparted to the clay, and pores are not larger than necessary after firing. Therefore, generation of defects can be inhibited.

In the present embodiment, a resin in a form of particles having an average particle diameter of preferably 30% or less, more preferably 20% or less, with respect to a thickness of partition walls of the honeycomb structure after absorbing water is used as the water-absorbing resin.

When an average particle diameter of the water-absorbing resin after absorbing water is above 30% with respect to a thickness of partition walls, a percentage of pores formed by the water-absorbing resin occupying a thickness of partition walls after firing is high, which sometimes becomes a defect in itself. When an average particle diameter of the water-absorbing resin after absorbing water is 30% or less with respect to a thickness of partition walls, pores are not larger than necessary after firing. Therefore, generation of defects can be inhibited.

In the present embodiment, a resin in a form of particles having an aspect ratio of preferably 50 or less, more preferably 30 or less, after absorbing water is used as the water-absorbing resin.

When an aspect ratio of the water-absorbing resin after absorbing water is above 50, the water-absorbing resin is orientated upon forming a honeycomb structure, and therefore pores formed by the water-absorbing resin after firing are formed in parallel to the partition walls and hardly become communicating pores, which sometimes causes increase in pressure loss. When an aspect ratio of the water-absorbing resin after absorbing water is 50 or less, pores formed by the water-absorbing resin after firing become communicating pores. Therefore, pressure loss can be reduced.

In the present embodiment, preferably 0.1 to 20 parts by mass, more preferably 1 to 20 parts by mass, of the water-absorbing resin is mixed with respect to 100 parts by mass of the ceramic raw material. Thus, it is preferable to determine an amount of the water-absorbing resin mixed in the clay with respect to the ceramic raw material.

When a mixing amount of the water-absorbing resin is below 0.1 parts by mass with respect to 100 parts by mass of the ceramic raw material, the mixing amount is too small to enhance plasticity of the clay, and a yield is sometimes lowered. When the mixing amount is above 20 parts by mass, heat generation upon debinding is large, and sometimes a crack is caused in a honeycomb structure. Thus, by controlling a mixing amount of the water-absorbing resin, an amount of heat generation upon debinding can be suppressed in the state that plasticity of the clay is enhanced. This enables to inhibit generation of a cell crack and to enhance a yield.

In the present embodiment, it is preferable that a mixing amount of water is obtained by multiplying a mixing amount of the water-absorbing resin by water-absorption ratio (mixing amount of the water-absorbing resin times water-absorption ratio) or more with respect to 100 parts by mass of the ceramic raw material.

By such a mixing amount of water, the water-absorbing resin can be in a saturated water-absorbing state, and water for dissolving an organic binder can be secured. This can further enhance plasticity and formability of the clay. In addition, since a large amount of water is mixed, porosity of a honeycomb structure after firing can further be raised.

In the present embodiment, the water-absorbing resin is mixed and kneaded in the state that a part of the water is previously absorbed in the water-absorbing resin.

By making water to be previously adsorbed, time for granulation of the water-absorbing resin with the ceramic raw material can be shortened, and as a result, time for kneading can be shortened.

In the present embodiment, a chlorine content in the water-absorbing resin is preferably 20 parts by mass or less with respect to 100 parts by mass of the water-absorbing resin, more preferably not contained.

By thus controlling a chlorine content in the water-absorbing resin, generation of dioxin or the like upon debinding can be inhibited. When dioxin or the like is generated upon debinding, a post-treatment step is necessary, and thereby a production cost is increased.

In the present embodiment, a sulfur content in the water-absorbing resin is preferably 20 parts by mass or less with respect to 100 parts by mass of the water-absorbing resin, more preferably not contained.

By thus controlling a sulfur content in the water-absorbing resin, generation of harmful gas such as SOₓ and H₂SO₄ upon debinding can be inhibited. when harmful gas is generated upon debinding, a post-treatment step for desulfurization or the like is necessary, and thereby a production cost is increased.

In the present embodiment, a nitrogen content in the water-absorbing resin is preferably 20 parts by mass or less with respect to 100 parts by mass of the water-absorbing resin, more preferably not contained.

By thus controlling a nitrogen content in the water-absorbing resin, generation of harmful gas such as NOₓ, HNO₃ and NH₃ upon debinding can be inhibited. When harmful gas is generated upon debinding, a post-treatment step for denitration or the like is necessary, and thereby a production cost is increased.

In the present embodiment, it is preferable that the water-absorbing resin constituting the clay in the first step does not contain alkali metal, sulfur, chlorine, nor nitrogen when firing of the honeycomb dried body in the third step is conducted in an inert atmosphere. By this constitution, the firing furnace is inhibited from being damaged by corrosion of the furnace material due to scattering of such a substance.

There is no particular limitation to a ceramic raw material used in the present invention as long as a ceramic capable of forming a fixed shape by firing or a substance which becomes ceramic having a fixed shape by firing. It is preferable to use as the main component at least one selected from a group consisting of a cordierite-forming raw material, mullite, alumina, aluminum titanate, lithium aluminum silicate, silicon carbide, silicon nitride, and metal silicon. By selecting such a raw material, the honeycomb structure can maintain a fixed shape even after firing.

It is preferable to use as the main component a cordierite-forming material from the viewpoint of thermal shock resistance. Incidentally, a cordierite-forming material means cordierite and/or a raw material which forms cordierite by firing. As the raw material, there may suitably be selected from talc, kaolin, calcined kaolin, alumina, aluminum hydroxide, and silica, with a chemical composition of 42 to 56 parts by mass of SiO₂, 30 to 45 parts by mass of Al₂O₃, and 12 to 16 parts by mass of MgO. In addition, the main component means a substance constituting 50 parts by mass or more, preferably 70 parts by mass or more, more preferably 80 parts by mass or more, of a ceramic raw material.

In the present embodiment, it is preferable that the water-absorbing resin contains neither alkali metal nor alkaline earth metal except for magnesium, aluminum, and silicon when the cordierite-forming raw material is used as the ceramic raw material.

By thus controlling the composition of the water-absorbing resin, mixing of alkali metal or alkaline earth metal except for magnesium, aluminum, and silicon can be avoided, and extraordinary thermal expansion of the honeycomb structure after firing can be avoided. When mixing of alkali metal or alkaline earth metal except for magnesium, aluminum, and silicon is caused, thermal expansion of the cordierite honeycomb structure after firing is increased.

It is preferable to use, as a ceramic raw material, silicon carbide alone or a material containing silicon carbide and metal silicon or silicon nitride as the main component from the viewpoint of thermal resistance of the honeycomb structure. When the ceramic raw material contains metal silicon (Si) and silicon carbide (SiC) as the main components, a Si content is prescribed by a compounding ratio of Si/(Si+SiC). When the Si content prescribed by the compounding ratio is too small, it is difficult to obtain an effect of Si addition. When the Si content is above 50 parts by mass, it is sometimes difficult to obtain effect in thermal resistance and heat conductibility. Therefore, the Si content is preferably 5 to 50 parts by mass, and more preferably 10 to 40 parts by mass.

In the present embodiment, it is preferable that a debinding treatment at 500°C or less for 10 hours or less is conducted before the honeycomb dried body is fired in the third step to burn out carbon contained in the water-absorbing resin when the metal silicon is used as the ceramic raw material.

By this constitution, carbonization of metal silicon can be avoided, and composition of the honeycomb structure after firing can be controlled. In addition, in the case that debinding at 500°C or more for 10 hours or more is required in order to burn out carbon in the water-absorbing resin, oxidation of metal silicon rapidly proceeds.

There is no particular limitation to an organic binder used in the present invention, and examples of the organic binder include celluloses such as methyl cellulose, hydroxypropoxyl cellulose, hydroxyethyl cellulose, and carboxymethyl cellulose and poly(vinyl alcohol). These may be employed alone or in combination. In addition, there may be added a surfactant such as ethylene glycol, dextrin, fatty acid soap, and polyalcohol besides the organic binder.

By dissolution of the organic binder, plasticity of the whole clay can sharply be enhanced in cooperation with the effect of increasing plasticity of the water-absorbing resin upon being mixed. By this, a yield can be raised, and size accuracy can be improved. Further, by adding the water-absorbing resin, time for kneading can be shortened, and productivity can be enhanced.

In the present embodiment, it is preferable that a pore-forming material is further mixed and kneaded in the material in addition to the water-absorbing resin.

Though the water-absorbing resin itself functions as a pore-forming material, porosity of a honeycomb structure can be raised by further adding a pore-forming material. There is no particular limitation to such a pore-forming material. Examples of the pore-forming material include graphite, wheat flour, starch, phenol resin, poly(methyl methacrylate), polyethylene, poly(ethylene terephthalate), unfoamed foaming resin, already foamed foaming resin, shirasu balloon, and fly ash balloon. In addition, by using the water-absorbing resin in combination with a pore-forming material, it is possible to suppress a mixing amount of the water-absorbing resin. Therefore, hardness of clay is raised, and size accuracy can be enhanced.

In the present embodiment, it is preferable to use returned clay as the clay. Here, returned clay means the clay which is formed again from a material subjected to share loading by a kneader, a pug mill, an extrusion die, or the like, via a clay-forming step and a forming step.

By using returned clay as the clay as described above, a yield of the raw material can be raised. Since an already foamed forming resin or the like has conventionally been used as a pore-forming material when porosity or a honeycomb structure is raised, it has been difficult to use returned clay as the clay because pore-formability of the clay is lowered due to share loading, thereby lowering porosity of a honeycomb structure after firing. When a water-absorbing resin is used as a constituent of the clay an in the present embodiment, since a water-absorbing resin has high mechanical strength and is hardly collapsed, porosity of a honeycomb structure after firing is not deviated even if returned clay is used as the clay. Thus, it is made possible to use returned clay as the clay, and by using returned clay as the clay, a yield of a raw material can be raised.

In the present embodiment, it is preferable to use returned dry clay as the raw material containing a ceramic raw material, an organic binder, and a water-absorbing resin. Here, returned dry clay means the clay which is to use again, as a raw material containing a ceramic raw material, an organic binder, and a water-absorbing resin, a material prepared by grinding a dried body prepared by subjecting a material to share loading by a kneader, a pug mill, an extrusion die, or the like, and drying via a clay-forming step, a forming step, and a drying step.

By using returned dry clay as the raw material containing a ceramic raw material, an organic binder, and a water-absorbing resin, a yield of the raw material can be raised. Since an already foamed foaming resin or an unfoamed foaming resin has conventionally been used as a pore-forming material when porosity or a honeycomb structure is raised, it has been difficult to obtain similar characteristics by using returned dry clay as the clay containing a ceramic raw material, an organic binder, and a water-absorbing resin because water contained in these resins is removed, and characteristics of the resins are changed. When a water-absorbing resin is used as a constituent of the clay, since the water-absorbing reaction of the water-absorbing resin is a reversible reaction, it is possible to show a similar level of characteristics by absorbing water again even if water is once removed. Thus, since porosity of a honeycomb structure after firing is not deviated even if a material which was made to be returned dry clay as the raw material containing a ceramic raw material, an organic binder, and a water-absorbing resin, a yield of a raw material can be raised by using returned dry clay.

### (Second step)

The second step of the present invention is a step of forming the clay obtained in the first step into a honeycomb structure, and then drying to obtain a honeycomb dried body.

There is no particular limitation to a method for forming the clay into a honeycomb structure, and, for example, an extrusion forming using an extruder may be employed. By thus subjecting the clay to extrusion forming, the clay can be made a formed body having a honeycomb structure having a number of cells 5 separated by partition walls 6 and extending in an axial direction (see Figs. 1 and 2)

There is no particular limitation to a method for drying the formed body having a honeycomb structure. For example, hot-air drying, microwave drying, dielectric drying, drying under reduced pressure, or vacuum drying may be employed. Among these, it is preferable to employ hot-air drying in combination with microwave drying or dielectric drying in that the whole body can be dried quickly and uniformly.

It is preferable that drying temperature of hot-air drying is within the range from 80 to 150°C in the point of rapid drying.

### (Third step)

The third step of the present invention is a step of firing the honeycomb dried body obtained in the second step to give a honeycomb structure having a porosity of 40% or more.

There is no limitation to a method for firing a honeycomb dried body. For example, firing in an oxidizing atmosphere, firing in a non-oxidizing atmosphere, or firing in an atmosphere under reduced pressure may suitably be employed.

Since optimal conditions depend on a ceramic raw material used for clay, the firing conditions (firing temperature and firing atmosphere) cannot uniformly be determined. According to a selected ceramic raw material, adequate firing temperature and firing atmosphere can suitably be selected.

For example, when an oxide type of material such as a cordierite-forming raw material or mullite is employed, it is generally preferable to fire in an ambient atmosphere. In the case of a cordierite-forming raw material, firing at 1400 to 1440°C is preferable. In the case of non-oxidizing material such as silicon carbide or silicon nitride, firing in a non-oxidizing atmosphere such as nitrogen or argon atmosphere is preferable. In the case of sintering silicon carbide with metal silicon, firing at 1400 to 1800°C is preferable. In addition, in the case of sintering silicon carbide with silicon nitride or the like, firing at 1550 to 1800°C is preferable. In addition, in the case of sintering silicon carbide particles with each other by recrystallization method, firing at 1800°C or more is preferable. In the case of forming silicon nitride by firing metal silicon in nitrogen, firing at 1200 to 1600°C is preferable.

Prior to such a firing treatment, it is preferable to conduct debinding (degreasing) by heating. The debinding treatment can be conducted by heating the honeycomb dried body, for example, at about 400°C in an ambient atmosphere.

Incidentally, in the case of using metal silicon as a ceramic raw material as described above, it is preferable to conduct a debinding treatment at 500°C or less for 10 hours or less before the honeycomb dried body is fired in the third step to burn out carbon contained in the water-absorbing resin. In addition, in the case of firing the honeycomb dried body in an inert atmosphere in the third step, it is preferable that the water-absorbing resin constituting the clay in the first step does not contain one or more kinds selected from a group consisting of alkali metal, sulfur, chlorine, and nitrogen.

### Example

### (Examples 1 to 3, Comparative Example 1)

Clay having plasticity was prepared by mixing SiC powder and metal Si powder as ceramic raw materials, starch and an already foamed foaming resin as pore-forming materials, methyl cellulose and hydroxypropoxylmethyl cellulose as organic binders, and water-absorbing resin A as a water-absorbing resin to give a mixture, adding water to the mixture, kneading the mixture to obtain clay having plasticity with a vacuum pug mill. There was used water-absorbing resin A having a water-absorption ratio of 10 times and an average particle diameter of 50 µm after absorbing water. A compounding ratio of these is shown in Table 1. Incidentally, water-absorbing resin A was not mixed in Comparative Example 1.

After subjecting the clay to extrusion forming to give a honeycomb structure, the formed body was dried with microwaves and hot air to obtain a ceramic formed body having a honeycomb structure having a thickness of partition walls of 310 µm, a cell density of 46.5 cells/cm²(300 cells/inch²), a square section having a side of 35 mm, and a length of 152 mm. The obtained ceramic formed body was measured for perpendicularity, range, and bend, and deformation was evaluated. The results of the evaluation is shown in Table 2.

As shown in Table 2, in Examples 1 to 3, where water-absorbing resin A was mixed, all values of perpendicularity, range, and bend were reduced in comparison with those of the Comparative Example 1, where the water-absorbing resin was not mixed. Thus, inhibition of deformation upon forming could be confirmed though it was in the middle stage of the present invention.

Subsequently, the ceramic formed body was dried with adjacent cells being plugged in mutually opposite end portions so that each end portion formed a checkerwise pattern, degreased at about 400°C in an ambient atmosphere, and then fired at about 1450°C in an Ar inert atmosphere to obtain a Si-bonded SiC segment (honeycomb structure) for a honeycomb filter. The segment was inspected for presence/absence of a defect (frequency of generation) using laser smoke, and kind of defect was identified by eye observation. In addition, porosity was measured by mercury penetration. The results of the measurement are shown in Table 3.

In the case that any defect is generated in a segment after firing in a DPF production process, the segment was counted as an inferior article, which causes deterioration in yield. Comparative Example 1, where a water-absorbing resin was not mixed, and a raw material of clay has low plasticity, had a very low yield, and most defects were cell cracks by insufficient press-bonding due to low plasticity. Example 1, where 0.5 part by mass of a water-absorbing resin was mixed, had a greatly improved yield. In Examples 2 and 3, where 2 parts by mass and 10 parts by mass of a water-absorbing resin were mixed, respectively, a yield was further improved. Further, "number of cell cracks / number of defects" and "yields due to cell cracks" are shown in Table 3.

### (Examples 4 to 9)

A ceramic formed body was prepared in the same manner as in Example 1 except that various water-absorbing resins (water-absorbing resins B, D, E, F, G, and H) shown in Table 4 other than water-absorbing resin A were used. The ceramic formed body obtained was measured for perpendicularity, range, and bend, deformation was evaluated, and the segment was evaluated for presence/absence of a defect (frequency of generation), number of cell cracks / number of defects, yields due to cell cracks, and porosity. The results of the evaluations and measurements are shown in Table 4.

In Table 4, the water-absorbing resins B, D, E, F, G, and H have water-absorption ratios of one time, five times, five times, 50 times, 100 times, and 300 times, respectively.

In Example 4, where water-absorbing resin B was employed, the water-absorbing resin had low water-absorption ratio, plasticity was not sharply enhanced, effect of making a shape better was relatively smaller than the other Examples, and a yield due to cell cracks was low though it was improved. In addition, pore formability was also relatively low, and porosity was 41 %, which was relatively low.

In Examples 6 and 7, plasticity was enhanced, and size accuracy was enhanced. However, since the water-absorbing resin had a large average diameter after absorbing water, pores formed by the water-absorbing resin were relatively large after firing and became a defect in itself, which caused cell cracks, and a yield was a little lowered. In Example 9, an effect in reducing defects by the mixing of the water-absorbing resin was seen. However, since the water-absorbing resin had a large water-absorption ratio, the honeycomb structure had low hardness, and deformation was relatively large. In addition, a drying cost was a little high.

In contrast, in Examples 5 and 8, besides improvement in yield, values of perpendicularity, range, and bend were smaller in comparison with those of Comparative Example 5, and size accuracy was enhanced.

### (Example 10)

A ceramic formed body was prepared in the same manner as in Example 5 except that a pore-forming material was mixed in addition to the water-absorbing resin D. The results of the evaluations and measurements are shown in Table 5. The honeycomb structure obtained in Example 10 had further enhanced size accuracy.

**Table 1**

| | Segment No. | SiC powder compounding ratio (parts by mass) | Metal Si powder compounding ratio (parts by mass) | Pore-forming material compounding ratio (parts by mass) | Water (parts by mass) | Water-absorbing resin compounding ratio (parts by mass) | Time for kneading (minute) |
|---|---|---|---|---|---|---|---|
| Example 1 | 1 | 80 | 20 | 15 | 34 | 0.5 | 41 |
| Example 2 | 2 | 80 | 20 | 15 | 49 | 2 | 41 |
| Example 3 | 3 | 80 | 20 | 15 | 109 | 10 | 39 |
| Comp. Ex. 1 | 4 | 80 | 20 | 15 | 29 | - | 63 |

**Table 2**

| | Segment No. | Perpendicularity (°) | Range (mm) | Bend (mm) |
|---|---|---|---|---|
| Example 1 | 1 | 0.68 | 0.31 | 0.40 |
| Example 2 | 2 | 0.71 | 0.41 | 0.25 |
| Example 3 | 3 | 0.71 | 0.56 | 0.41 |
| Comp. Ex. 1 | 4 | 1.22 | 0.86 | 0.52 |

**Table 3**

| | Segment No. | Porosity (%) | frequency of defect generation in segment (n=100) | Number of cell crack(s) / number of defect(s) | Yield due to cell crack (%) |
|---|---|---|---|---|---|
| Example 1 | 1 | 54 | 5 | 4/5 | 96 |
| Example 2 | 2 | 58 | 1 | 0/1 | 100 |
| Example 3 | 3 | 65 | 2 | 1/2 | 99 |
| Comp. Ex. 1 | 4 | 52 | 81 | 74/81 | 26 |

**Table 4**

| | Water-absorbing resin No. | Water-absorption ratio | Average particle diameter after absorbing water (µm) | Perpendicularity (°) | Range (mm) | Bend (mm) | Porosity (%) | Frequency of defect generation in segment (n=100) | Number of cell crack(s) / number of defect(s) | Yield due to cell crack (%) |
|---|---|---|---|---|---|---|---|---|---|---|
| Example 4 | B | 1 | 1.7 | 1.00 | 0.66 | 0.42 | 41 | 43 | 42/43 | 58 |
| Example 5 | D | 5 | 150 | 0.67 | 0.44 | 0.26 | 52 | 6 | 4/6 | 96 |
| Example 6 | E | 5 | 250 | 0.58 | 0.46 | 0.44 | 55 | 45 | 41/45 | 59 |
| Example 7 | F | 50 | 300 | 0.71 | 0.49 | 0.45 | 63 | 55 | 54/55 | 46 |
| Example 8 | G | 100 | 100 | 0.61 | 0.45 | 0.40 | 67 | 5 | 3/5 | 97 |
| Example 9 | H | 300 | 150 | 1.11 | 0.83 | 0.54 | 69 | 7 | 4/7 | 96 |

**Table 5**

| | Water-absorbing resin No. | Water-absorption ratio | Average particle diameter after absorbing water (µm) | Pore-forming material com-pounding ratio (parts by mass) | Perpendicularity (°) | Range (mm) | Bend (mm) | Porosity (%) | Frequency of defect genera-tion in segment (n=100) | Number of cell crack(s) / number of defect(s) | Yield due to cell crack (%) |
|---|---|---|---|---|---|---|---|---|---|---|---|
| Example 10 | D | 5 | 150 | 10 | 0.41 | 0.30 | 0.15 | 55 | 5 | 5/6 | 96 |

### (Example 11)

### [Method for producing a honeycomb formed body]

As a raw material for aggregate particles, there has been prepared a cordierite-forming material having a compounding ratio of 40% by mass of talc (average particle diameter of 21 µm), 18.5% by mass of kaolin (average particle diameter of 11 µm), 14.0% by mass of alumina (average particle diameter of 7 µm), 15% by mass of aluminum hydroxide (average particle diameter of 2 µm), and 12.5% by mass of silica (average particle diameter of 25 µm).

To 100 parts by mass of the above raw material for aggregate particles were added 4.0 parts by mass of a water-absorbing resin (water-absorption ratio of 10 times, average particle diameter of 32 µm) as the first pore-forming material and 5.0 parts by mass of hydroxypropylmethyl cellulose as an organic binder. They were mixed for three minutes with a ploughshare mixer (Commercial name: Ploughshare Mixer, produced by Pacific Machinery & Engineering Co., Ltd.). As stirring conditions of the ploughshare mixer, the ploughshare driving axis had a rotational frequency of 100 rpm, and the chopper driving axis had a rotational frequency of 3000 rpm.

Then, as the second pore-forming material, 1.0 parts by mass of an acrylic resin based microcapsule (average particle diameter of 43 µm) was put in the above ploughshare mixer and mixed for three minutes in the same manner. Further, there were prepared 0.1 parts by mass of fatty acid soap (potassium laurate) as a dispersant and 55 parts by mass of water as a dispersion medium. With spraying and adding a mixed solution of these in the mixer, mixing was performed for three minutes in the same manner to obtain a compound for forming (wet powder).

The compound for forming (wet powder) obtained as described above was subjected to kneading with a sigma kneader and further kneading with a screw-type extrusion kneader (vacuum pug mill) provided with a vacuum decompression apparatus to obtain clay extruded into a cylindrical form (outer diameter of 300 mm).

The clay obtained as described above was subjected to extrusion forming with a ram-type extruder using an extrusion die having slits having a shape complementary to partition walls of a honeycomb formed body to form a honeycomb structure having a number of cells formed and separated by partition walls. At this time, a screen having a mesh size of 233 µm was disposed inside the ram-type extruder so that the clay was extruded after passing through the screen. The formed body was completely dried by dielectric drying and hot air drying to obtain a honeycomb formed body. Both end surfaces of the honeycomb formed body were cut off to give predetermined dimensions to the honeycomb formed body.

### [Production of a honeycomb filter]

An opening portion of a number of cells of the honeycomb formed body obtained as described above was plugged alternately with the other opening portion to obtain a plugged honeycomb formed body. There was employed a plugging method where an adhesive sheet is applied on an end face of the honeycomb formed body, holes were made only in portions corresponding with cells to be plugged in the adhesive sheet by laser machining using image processing to give a mask, the end face having the mask of the honeycomb formed body was immersed in ceramic slurry to fill up the cells to be plugged of the honeycomb formed body to form plugged portions.

The ceramic slurry was prepared by mixing, with the same aggregate particle raw material as in the honeycomb formed body as the aggregate particle raw material, 0.5 parts by mass of methyl cellulose as a bonding agent, 0.3 parts by mass of a special carboxylic acid type high-molecular surface-active agent (Commercial name: Poiz 530, Produced by Kao Corporation) as a deflocculant, and 50 parts by mass of water with respect to 100 parts by mass of an aggregate particle raw material, stirring the mixture for 30 minutes. The ceramic slurry had a viscosity of 25 Pa·s.

After completely drying the plugged honeycomb formed body obtained as described above by hot air drying, the plugged honeycomb dried body was fired at 1420°C for seven hours to obtain a honeycomb structure constituted so that admixtures are trapped in the partition walls when fluid to be treated which is introduced in a part of the cells flows in adjacent cells by passing through porous partition walls.

The honeycomb structure (filter) had a circular end face (cell opening face) having an outer diameter of 229 mm, a length of 254 mm, a square cell shape of 1.16 mm x 1.16 mm, a thickness of partition walls of 300 µm, a cell density of about 300 cells/inch² (46.5 cells/cm²), and the total cell number of 19085.

### (Comparative Example 2)

A honeycomb structure (filter) was obtained in the same manner as in Example 11 except that there were used 2.0 parts by mass of an acrylic resin based microcapsule (average particle diameter of 43 µm) instead of a water-absorbing resin as a pore-forming material and 35 parts by mass of water as a dispersing medium.

### [Evaluation]

With regard to the honeycomb structures (filters) in Example 11 and Comparative Example 2, evaluation was given on an extent of internal defects of the honeycomb structure (filter), i.e., filtration performance (trapping efficiency) of the filter by calculating a soot-leaking cell ratio by a soot print test.

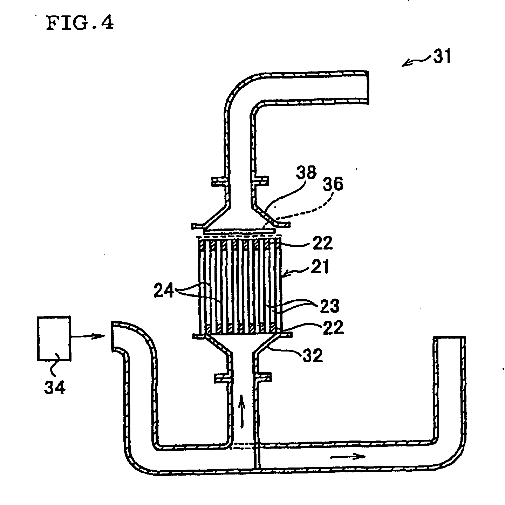

The soot print test was conducted using, as shown in Fig. 4, an inspection apparatus 31 constituted by a support 32 for supporting a honeycomb structure (filter) 21 in the state that the peripheral edge portions are airtightly sealed, a soot generator 34 joined to the support 32 and supplying gas containing graphite particles, a screen 36 (using white cloth) for trapping graphite particles, and exhaust gas pipe 38 for collecting gas passed though the screen 36 according to the method described in JP-B-5-658.

First, each of honeycomb structures (filters) 21 in Example 11 and Comparative Example 2 was mounted on the support 32, and the exhaust gas pipe 38 was set on the upper end face of the honeycomb structure (filter) 21 to fix the honeycomb structure (filter) 21 in the state that the honeycomb structure (filter) was held between the support 32 and the exhaust gas pipe 38. In this state, gas containing graphite particles was sent into the cells from one end face side of the honeycomb structure (filter) 21 from the soot generator 32 at about 70 g/hour to accumulate soot at 5 g/liter in the honeycomb structure (filter) 21. In Fig. 4, the reference numerals 22 and 24 denote plugged portions and partition walls, respectively.

Next, after sticking the screen 36 fast to the upper end face of the honeycomb structure (filter) 21, the exhaust gas pipe 38 was set again from above the screen 36 to fix the honeycomb structure(filter) 21 and the screen 36 in such a state that they were held between the support 32 and the exhaust gas pipe 38. In this state, gas containing graphite particles was sent into the cells from one end face side of the honeycomb structure (filter) 21 from the soot generator 32 at about 70 g/hour, and images (i.e., black points) of graphite particles trapped by the screen 36 having gas permeability and stuck fast to the other end face were observed, and the number was counted.

As a result, the honeycomb structure (filter) obtained in Example 11 had a soot-leaking cell ratio of 0.5 cell / 1000 cell (i.e., 1 cell / 1000 cell or less) with few internal defects and excellent filtration performance (trapping efficiency). In contrast, the honeycomb structure (filter) obtained in Comparative Example 2 had a soot-leaking cell ratio of 2.5 cell / 1000 cell (i.e., 1 cell / 1000 cell or less) with not a few internal defects and insufficient filtration performance (trapping efficiency).

Incidentally, each of honeycomb structures (filters) obtained in Example 11 and Comparative Example 2 was cut at a portion where soot leakage was caused, and the portion was observed. A few small pores having a diameter of about 0.5 mm were observed in a honeycomb structure (filter) obtained in Example 11, which is allowable as an extent of internal defects. However, not a few fine sprits or cuts having a length of about 10 to 100 mm were observed in a honeycomb structure (filter) obtained in Comparative Example 2, which is beyond the allowable level and an extent of internal defects.

From this, it can be said that the water-absorbing resin enhanced flowability, press-bondability, etc., of clay for forming the honeycomb structure and reduced internal defects of the honeycomb structure.

### Industrial Applicability

A method for producing a honeycomb structure of the present invention is effectively used in various industrial fields requiring various filters for a diesel engine exhaust gas-treating apparatus, a dust-removing apparatus, a water-treating apparatus, etc.

## Claims

1. A method for producing a honeycomb structure, comprising:
a first step of mixing and kneading a ceramic raw material, an organic binder, a water-absorbing resin, and water to obtain clay,
a second step of forming the clay into a honeycomb-structured shape and drying the clay to obtain a honeycomb dried body, and
a third step of firing the honeycomb dried body to obtain a honeycomb structure having a porosity of 40% or more after firing.

2. A method for producing a honeycomb structure according to Claim 1, wherein a resin in a form of particles having an average particle diameter of 2 to 200 µm after absorbing water is used as the water-absorbing resin constituting the clay in the first step.

3. A method for producing a honeycomb structure according to Claim 1 or 2, wherein a resin in a form of particles having a particle distribution of 20 parts by mass or less of particles having a particle diameter of 10 µm or less and 20 parts by mass or less of particles having a particle diameter of 100 µm or more after absorbing water is used as the water-absorbing resin constituting the clay in the first step.

4. A method for producing a honeycomb structure according to any one of Claims 1 to 3, wherein a resin in a form of particles having an average particle diameter of 30% or less with respect to a thickness of partition walls of the honeycomb structure after absorbing water is used as the water-absorbing resin constituting the clay in the first step.

5. A method for producing a honeycomb structure according to any one of Claims 1 to 4, wherein a resin in a form of particles having an aspect ratio of 50 or less after absorbing water is used as the water-absorbing resin constituting the clay in the first step.

6. A method for producing a honeycomb structure according to any one of Claims 1 to 5, wherein 0.1 to 20 parts by mass of the water-absorbing resin constituting the clay in the first step is mixed with respect to 100 parts by mass of the ceramic raw material.

7. A method for producing a honeycomb structure according to any one of Claims 1 to 6, wherein an amount of the water constituting the clay in the first step is a value obtained by multiplying a mixing amount of the water-absorbing resin by water-absorption ratio (mixing amount of the water-absorbing resin times water-absorption ratio) or more with respect to 100 parts by mass of the ceramic raw material.

8. A method for producing a honeycomb structure according to any one of Claims 1 to 7, wherein the water-absorbing resin constituting the clay in the first step is mixed and kneaded in the state that a part of the water is previously absorbed in the water-absorbing resin.

9. A method for producing a honeycomb structure according to any one of Claims 1 to 8, wherein a chlorine content in the water-absorbing resin constituting the clay in the first step is 20 parts by mass or less with respect to 100 parts by mass of the water-absorbing resin.

10. A method for producing a honeycomb structure according to any one of Claims 1 to 9, wherein a sulfur content in the water-absorbing resin constituting the clay in the first step is 20 parts by mass or less with respect to 100 parts by mass of the water-absorbing resin.

11. A method for producing a honeycomb structure according to any one of Claims 1 to 10, wherein a nitrogen content in the water-absorbing resin constituting the clay in the first step is 20 parts by mass or less with respect to 100 parts by mass of the water-absorbing resin.

12. A method for producing a honeycomb structure according to any one of Claims 1 to 11, wherein returned clay is used as the clay in the first step.

13. A method for producing a honeycomb structure according to any one of Claims 1 to 12, wherein returned dry clay is used as a raw material containing the ceramic raw material, the organic binder, and the water-absorbing resin in the first step.

14. A method for producing a honeycomb structure according to any one of Claims 1 to 13, wherein a pore-forming material is further mixed and kneaded to obtain the clay in the first step.

15. A method for producing a honeycomb structure according to any one of Claims 1 to 14, wherein the ceramic raw material constituting the clay in the first step contains as a main component at least one selected from a group consisting of a cordierite-forming raw material, mullite, alumina, aluminum titanate, lithium aluminum silicate, silicon carbide, silicon nitride, and metal silicon.

16. A method for producing a honeycomb structure according to Claim 15, wherein the cordierite-forming raw material is used as the ceramic raw material, and the water-absorbing resin contains neither alkali metal nor alkaline earth metal except for magnesium, aluminum, and silicon.

17. A method for producing a honeycomb structure according to Claim 15, wherein metal silicon is used as the ceramic raw material, and a debinding treatment at 500°C or less for 10 hours or less is conducted before the honeycomb dried body is fired in the third step to burn out carbon contained in the water-absorbing resin.

18. A method for producing a honeycomb structure according to any one of Claims 1 to 17, wherein the firing of the honeycomb dried body in the third step is conducted in a non-oxidizing atmosphere, and the water-absorbing resin constituting the clay in the first step does not contain one or more kinds selected from a group consisting of alkali metal, sulfur, chlorine, and nitrogen.

## Patentansprüche

1. Verfahren zum Herstellen einer Wabenstruktur, umfassend:
einen ersten Schritt des Mischens und Knetens eines keramischen Rohmaterials, eines organischen Bindemittels, eines wasserabsorbierenden Harzes und von Wasser, um Ton zu erhalten,
einen zweiten Schritt des Ausbildens des Tons in eine Wabenstrukturform und Trocknen des Tons, um einen getrockneten Wabenkörper zu erhalten, und
einen dritten Schritt des Brennens des getrockneten Wabenkörpers, um eine Wabenstruktur mit einer Porosität von 40 % oder mehr nach dem Brennen zu erhalten.

2. Verfahren zum Herstellen einer Wabenstruktur nach Anspruch 1, worin ein Harz in Form von Teilchen mit einem mittleren Teilchendurchmesser von 2 bis 200 µm nach dem Absorbieren von Wasser als wasserabsorbierendes Harz verwendet wird, das den Ton im ersten Schritt bildet.

3. Verfahren zum Herstellen einer Wabenstruktur nach Anspruch 1 oder 2, worin ein Harz in Form von Teilchen mit einer Teilchenverteilung von 20 Masseanteilen oder weniger von Teilchen mit einem Teilchendurchmesser von 10 µm oder weniger und 20 Masseanteilen oder weniger von Teilchen mit einem Teilchendurchmesser von 100 µm oder mehr nach dem Absorbieren von Wasser als wasserabsorbierendes Harz verwendet wird, das den Ton im ersten Schritt bildet.

4. Verfahren zum Herstellen einer Wabenstruktur nach einem der Ansprüche 1 bis 3, worin ein Harz in Form von Teilchen mit einem mittleren Teilchendurchmesser von 30 % oder weniger in Bezug auf eine Dicke von Trennwänden der Wabenstruktur nach dem Absorbieren von Wasser als wasserabsorbierendes Harz verwendet wird, das den Ton im ersten Schritt bildet.

5. Verfahren zum Herstellen einer Wabenstruktur nach einem der Ansprüche 1 bis 4, worin ein Harz in Form von Teilchen mit einem Querschnittsverhältnis von 50 oder weniger nach dem Absorbieren von Wasser als wasserabsorbierendes Harz verwendet wird, das den Ton im ersten Schritt bildet.

6. Verfahren zum Herstellen einer Wabenstruktur nach einem der Ansprüche 1 bis 5, worin 0,1 bis 20 Masseanteile des wasserabsorbierenden, den Ton im ersten Schritt bildenden Harzes im Verhältnis zu 100 Masseanteilen des keramischen Rohmaterials gemischt werden.

7. Verfahren zum Herstellen einer Wabenstruktur nach einem der Ansprüche 1 bis 6, worin die Menge des den Ton im ersten Schritt bildenden Wassers ein Wert ist, der durch das Multiplizieren einer Mischungsmenge des wasserabsorbierenden Harzes mit dem Wasserabsorptionsverhältnis (Mischungsmenge des wasserabsorbierenden Harzes Mal das Wasserabsorptionsverhältnis) oder mehr im Verhältnis zu 100 Masseanteilen des keramischen Rohmaterials erhalten wird.

8. Verfahren zum Herstellen einer Wabenstruktur nach einem der Ansprüche 1 bis 7, worin das wasserabsorbierende, den Ton im ersten Schritt bildende Harz in einem solchen Zustand gemischt und geknetet wird, dass ein Teil des Wassers vorher vom wasserabsorbierenden Harz absorbiert worden ist.

9. Verfahren zum Herstellen einer Wabenstruktur nach einem der Ansprüche 1 bis 8, worin ein Chlorgehalt im wasserabsorbierenden, den Ton im ersten Schritt bildenden Harz 20 Masseanteile oder weniger im Verhältnis zu 100 Masseanteilen des wasserabsorbierenden Harzes ausmacht.

10. Verfahren zum Herstellen einer Wabenstruktur nach einem der Ansprüche 1 bis 9, worin ein Schwefelgehalt im wasserabsorbierenden, den Ton im ersten Schritt bildenden Harz 20 Masseanteile oder weniger im Verhältnis zu 100 Masseanteilen des wasserabsorbierenden Harzes ausmacht.

11. Verfahren zum Herstellen einer Wabenstruktur nach einem der Ansprüche 1 bis 10, worin ein Stickstoffgehalt im wasserabsorbierenden, den Ton im ersten Schritt bildenden Harz 20 Masseanteile oder weniger im Verhältnis zu 100 Masseanteilen des wasserabsorbierenden Harzes ausmacht.

12. Verfahren zum Herstellen einer Wabenstruktur nach einem der Ansprüche 1 bis 11, worin Rückführton als der Ton im ersten Schritt verwendet wird.

13. Verfahren zum Herstellen einer Wabenstruktur nach einem der Ansprüche 1 bis 12, worin Rückführton als Rohmaterial verwendet wird, das das keramische Rohmaterial, das organische Bindemittel und das wasserabsorbierende Harz im ersten Schritt umfasst.

14. Verfahren zum Herstellen einer Wabenstruktur nach einem der Ansprüche 1 bis 13, worin ferner ein porenbildendes Material gemischt und geknetet wird, um den Ton im ersten Schritt zu erhalten.

15. Verfahren zum Herstellen einer Wabenstruktur nach einem der Ansprüche 1 bis 14, worin das den Ton im ersten Schritt bildende keramische Rohmaterial als Hauptkomponente zumindest eines ausgewählt aus einer Gruppe bestehend aus einem cordieritbildenden Rohmaterials, Mullit, Aluminiumoxid, Aluminiumtitanat, Lithiumaluminiumsilikat, Silikonkarbid, Silikonnitrid und Metallsilikon aufweist.

16. Verfahren zum Herstellen einer Wabenstruktur nach einem der Ansprüche 1 bis 15, worin das cordieritbildende Rohmaterial als das keramische Rohmaterial verwendet wird und das wasserabsorbierende Harz weder Alkalimetall, noch Erdalkalimetall, mit Ausnahme von Magnesium, Aluminium und Silikon, enthält.

17. Verfahren zum Herstellen einer Wabenstruktur nach einem der Ansprüche 1 bis 15, worin Metallsilikon als das keramische Rohmaterial verwendet wird und eine Entbinderungsbehandlung bei 500 °C oder weniger 10 Stunden lang durchgeführt wird, bevor der getrocknete Wabenkörper im dritten Schritt gebrannt wird, um im wasserabsorbierenden Harz enthaltenen Kohlenstoff abzubrennen.

18. Verfahren zum Herstellen einer Wabenstruktur nach einem der Ansprüche 1 bis 17, wobei das Brennen des getrockneten Wabenkörpers im dritten Schritt in einer nichtoxidierenden Atmosphäre durchgeführt wird und das wasserabsorbierende Harz, das den Ton im ersten Schritt bildet, kein(e) Element(e) ausgewählt aus der Gruppe bestehend aus Alkalimetall, Schwefel, Chlor und Stickstoff enthält.

## Revendications

1. Procédé pour produire une structure de nid d'abeilles, comprenant :
une première étape de mélange et de malaxage d'une matière première de céramique, un liant organique, une résine absorbant l'eau, et de l'eau pour obtenir une argile,
une deuxième étape de formation de l'argile dans une forme structurée en nid d'abeilles et séchage de l'argile pour obtenir un corps séché de nid d'abeilles, et
une troisième étape de cuisson du corps séché de nid d'abeilles pour obtenir une structure de nid d'abeilles ayant une porosité de 40 % ou plus après cuisson.

2. Procédé pour produire une structure de nid d'abeilles selon la revendication 1, dans lequel une résine sous forme de particules ayant un diamètre de particule moyen de 2 à 200 après absorption d'eau est utilisée en tant que résine absorbant l'eau constituant l'argile dans la première étape.

3. Procédé pour produire une structure de nid d'abeilles selon la revendication 1 ou 2, dans lequel une résine sous forme de particules ayant une distribution de particules de 20 parties en masse ou moins de particules ayant un diamètre de particule de 10 µm ou moins et 20 parties en masse ou moins de particules ayant un diamètre de particule de 100 µm ou plus après absorption d'eau est utilisée en tant que résine absorbant l'eau constituant l'argile dans la première étape.

4. Procédé pour produire une structure de nid d'abeilles selon l'une quelconque des revendications 1 à 3, dans lequel une résine sous forme de particules ayant un diamètre de particule moyen de 30 % ou moins par rapport à l'épaisseur de paroi de séparation de la structure de nid d'abeilles après absorption d'eau est utilisée en tant que résine absorbant l'eau constituant l'argile dans la première étape.

5. Procédé pour produire une structure de nid d'abeilles selon l'une quelconque des revendications 1 à 4, dans lequel une résine sous forme de particules ayant un facteur de forme de 50 ou moins après absorption d'eau est utilisée en tant que résine absorbant l'eau constituant l'argile dans la première étape.

6. Procédé pour produire une structure de nid d'abeilles selon l'une quelconque des revendications 1 à 5, dans lequel de 0,1 à 20 parties en masse de la résine absorbant l'eau constituant l'argile dans la première étape sont mélangées par rapport à 100 parties en masse de la matière première de céramique.

7. Procédé pour produire une structure de nid d'abeilles selon l'une quelconque des revendications 1 à 6, dans lequel une quantité de l'eau constituant l'argile dans la première étape est une valeur obtenue en multipliant une quantité de mélange de la résine absorbant l'eau par le rapport d'absorption d'eau (quantité de mélange de la résine absorbant l'eau multipliée par le rapport d'absorption d'eau) ou plus par rapport à 100 parties en masse de la matière première de céramique.

8. Procédé pour produire une structure de nid d'abeilles selon l'une quelconque des revendications 1 à 7, dans lequel la résine absorbant l'eau constituant l'argile dans la première étape est mélangée et malaxée dans l'état dans lequel une partie de l'eau est précédemment absorbée dans la résine absorbant l'eau.

9. Procédé pour produire une structure de nid d'abeilles selon l'une quelconque des revendications 1 à 8, dans lequel une teneur en chlore dans la résine absorbant l'eau constituant l'argile dans la première étape est de 20 parties en masse ou moins par rapport à 100 parties en masse de la résine absorbant l'eau.

10. Procédé pour produire une structure de nid d'abeilles selon l'une quelconque des revendications 1 à 9, dans lequel la teneur en soufre dans la résine absorbant l'eau constituant l'argile dans la première étape est de 20 parties en masse ou moins par rapport à 100 parties en masse de la résine absorbant l'eau.

11. Procédé pour produire une structure de nid d'abeilles selon l'une quelconque des revendications 1 à 10, dans lequel la teneur en azote dans la résine absorbant l'eau constituant l'argile dans la première étape est de 20 parties en masse ou moins par rapport à 100 parties en masse de la résine absorbant l'eau.

12. Procédé pour produire une structure de nid d'abeilles selon l'une quelconque des revendications 1 à 11, dans lequel l'argile retournée est utilisée en tant qu'argile dans la première étape.

13. Procédé pour produire une structure de nid d'abeilles selon l'une quelconque des revendications 1 à 12, dans lequel l'argile sèche retournée est utilisée en tant que matière première contenant la matière première de céramique, le liant organique, et la résine absorbant l'eau dans la première étape.

14. Procédé pour produire une structure de nid d'abeilles selon l'une quelconque des revendications 1 à 13, dans lequel un matériau porogène est en outre mélangé et malaxé pour obtenir l'argile dans la première étape.

15. Procédé pour produire une structure de nid d'abeilles selon l'une quelconque des revendications 1 à 14, dans lequel la matière première de céramique constituant l'argile dans la première étape contient en tant que composant principal au moins l'un choisi dans le groupe constitué d'une matière première formant une cordiérite, la mullite, l'alumine, le titanate d'aluminium, le silicate de lithium-aluminium, le carbure de silicium, le nitrure de silicium, et du silicium métallique.

16. Procédé pour produire une structure de nid d'abeilles selon la revendication 15, dans lequel la matière première formant une cordiérite est utilisée en tant que matière première de céramique, et la résine absorbant l'eau ne contient ni un métal alcalin, ni un métal alcalino-terreux sauf le magnésium, l'aluminium et le silicium.

17. Procédé pour produire une structure de nid d'abeilles selon la revendication 15, dans lequel du silicium métallique est utilisé en tant que matière première de céramique, et un traitement de déliantage à 500°C ou moins pendant 10 heures ou moins est conduit avant que le corps séché de nid d'abeilles soit cuit dans la troisième étape pour consumer le carbone contenu dans la résine absorbant l'eau.

18. Procédé pour produire une structure de nid d'abeilles selon l'une quelconque des revendications 1 à 17, dans lequel la cuisson du corps séché de nid d'abeilles dans la troisième étape est conduite dans une atmosphère non oxydante, et la résine absorbant l'eau constituant l'argile dans la première étape ne contient pas un ou plusieurs types choisis dans un groupe constitué d'un métal alcalin, du soufre, du chlore, et de l'azote.
